# EUROPÄISCHE PATENTSCHRIFT

(11) **EP 3 691 856 B1**
(45) Veröffentlichungstag und Bekanntmachung des Hinweises auf die Patenterteilung: **07.06.2023**
(21) Anmeldenummer: 18769034.2
(22) Anmeldetag: 05.09.2018
(51) Int. Cl.: B29C 48/25, B29C 48/40, F16H 1/22, F16H 37/08

(54) **GETRIEBESYSTEM UND EXTRUDERMASCHINE MIT EINEM GETRIEBESYSTEM**
TRANSMISSION SYSTEM AND EXTRUDER MACHINE HAVING A TRANSMISSION SYSTEM
SYSTÈME DE TRANSMISSION ET EXTRUDEUR COMPRENANT UN SYSTÈME DE TRANSMISSION

(30) Priorität: 05.10.2017 DE 102017009252
(43) Veröffentlichungstag der Anmeldung: 12.08.2020
(73) Patentinhaber: SEW-EURODRIVE GmbH & Co. KG, 76646 Bruchsal (DE)
(72) Erfinder: STREIT, Jürgen, 75038 Oberderdingen (DE); SCHULTE RENGER, Dennis, 68723 Schwetzingen (DE)
(86) Internationale Anmeldenummer: PCT/EP2018/025227
(87) Internationale Veröffentlichungsnummer: WO 2019/068364

(56) Entgegenhaltungen:
- EP-A1- 0 775 568
- DE-A1-102006 014 237
- DE-U1-202015 006 083
- JP-A- H01 234 223
- US-B1- 7 521 076

## Beschreibung

Die Erfindung betrifft eine Extrudermaschine mit einem Getriebesystem.

Es ist allgemein bekannt, dass bei einem Getriebemotor ein Elektromotor ein Getriebe antreibt.

**Aus der** DE 2 261 511 A **ist eine Antriebsvorrichtung für schneckenpresse großer Leistung bekannt.**

**Aus der** DE 20 2015 006 083 U1 **ist eine Hubwindenanordnung bekannt.**

**Aus der** DE 10 2006 014 237 A1 **ist ein Verspannungsprüfstand bekannt.**

**Aus der** US 7 521 076 B1 **ist ein Extruder bekannt.**

**Aus der** EP 0 775 568 A1 **ist als nächstliegender Stand der Technik eine**

**Extrudermaschine mit miteinander drehfest gekoppelten Zwischenwellen bekannt.** Die EP 0 775 568 A1 offenbart den Oberbegriff des Anspruchs 1.

**Aus der** JP H01 234223 A **ist eine Extrudermaschine ohne gekoppelte Zwischenwellen bekannt.**

Der Erfindung liegt daher die Aufgabe zugrunde, ein sicheres Antreiben zu erreichen.

Erfindungsgemäß wird die Aufgabe bei der Extrudermaschine nach den in Anspruch 1 angegebenen Merkmalen gelöst.

Wichtige Merkmale der Erfindung bei dem Getriebesystem sind, dass das Getriebesystem ein erstes und ein zweites Getriebe aufweist,
wobei das erste Getriebe zumindest eine Getriebestufe aufweist, deren abtreibende Welle als eintreibende Welle einer zweiten Getriebestufe des ersten Getriebes fungiert und somit eine erste Zwischenwelle ist,
wobei das zweite Getriebe zumindest eine Getriebestufe aufweist, deren abtreibende Welle als eintreibende Welle einer zweiten Getriebestufe des zweiten Getriebes fungiert und somit eine zweite Zwischenwelle ist,
wobei die erste Zwischenwelle aus dem Gehäuse des ersten Getriebes herausgeführt ist,
wobei die zweite Zwischenwelle aus dem Gehäuse des zweiten Getriebes herausgeführt ist,
wobei die erste und zweite Zwischenwelle miteinander drehfest gekoppelt sind.

Von Vorteil ist dabei, dass die Sicherheit erhöht ist, weil die eine starre Kopplung gewährleistet ist. Bei Versagen der Elektronik sind also die Drehwinkelstellungen der abtreibenden Wellen der Getriebe weiterhin starr gekoppelt. Da die Kopplung nicht bei den abtreibenden Wellen erfolgt, müssen die koppelnden Wellen nicht sehr dick ausgeführt werden. Da die Kopplung aber auch nicht auf der eintreibenden Seite erfolgt, müssen die Motoren mit einem nur geringen Nennmoment ausgeführt werden und es ist eine höhere Dynamik erreichbar. Die Verbindungswellen, also auch die Zwischenwellen, müssen nur die maximale Abweichung vom Durchschnittswert der Belastung übertragen können und nicht die maximale notwendige Antriebsleistung der Synchronmotoren. Außerdem sind die Zwischenwellen einer geringeren Drehzahl ausgesetzt und somit werden auch geringere Geräuschleistungen erreicht. Ebenso sind auch Schwingungen reduziert. Die Zwischenwellen sind außerdem einfacher auszuwuchten. Bauraum und zu bewegende Massen sind geringer.

Bei einer vorteilhaften Ausgestaltung ist die erste Getriebestufe des ersten Getriebes eine Stirnradgetriebestufe,
wobei die zweite Getriebestufe des ersten Getriebes eine Stirnradgetriebestufe ist,
wobei die erste Getriebestufe des zweiten Getriebes eine Stirnradgetriebestufe ist,
wobei die zweite Getriebestufe des zweiten Getriebes eine Stirnradgetriebestufe ist. Von Vorteil ist dabei, dass eine einfache Herstellung ermöglicht ist. Außerdem ist die jeweilige Zwischenwelle in zwei im jeweiligen Gehäuse des jeweiligen Getriebes aufgenommenen Lagern gelagert und somit in einfacher Weise herausführbar aus dem Gehäuse. Hierzu ist nur eine entsprechende Durchgangsbohrung im Gehäuse vorzusehen und eine Abdichtung, insbesondere Wellendichtring, zwischen Gehäuse und Zwischenwelle vorzusehen.

**Erfindungsgemäß** ist die abtreibende Welle des ersten Getriebes drehfest mit einer ersten Extruderschnecke verbunden,
wobei die abtreibende Welle des zweiten Getriebes drehfest mit einer zweiten Extruderschnecke verbunden ist,
wobei die Schneckenverzahnungen der ersten und zweiten Extruderschnecke ineinandergreifen, wobei die die Schneckenverzahnungen der ersten und zweiten Extruderschnecke sich nicht berühren. Von Vorteil ist dabei, dass die Extruderschnecken vor Zerstörung geschützt sind - auch bei Ausfall oder Fehlfunktion der die Motoren speisenden Wechselrichter.

Bei einer vorteilhaften Ausgestaltung ist die erste Zwischenwelle über ein erstes und ein zweites Winkelgetriebe mit der zweiten Zwischenwelle drehfest verbunden,
insbesondere wobei eine insbesondere abtreibende Welle des ersten Winkelgetriebes mittels Gelenk und/oder Gelenkwellen mit einer insbesondere abtreibenden Welle des zweiten Winkelgetriebes verbunden sind. Von Vorteil ist dabei, dass das Ausgleichsdrehmoment von der ersten Zwischenwelle durch das erste und durch das zweite Winkelgetriebe zur zweiten Zwischenwelle geleitet wird. Somit müssen die beiden Getriebe nicht parallel zueinander ausgerichtet sein, sondern dürfen um einen nicht verschwindenden Winkel zueinander geneigt in einer Anlage aufgestellt sein.

Bei einer vorteilhaften Ausgestaltung ist das Gehäuse des ersten Winkelgetriebes mit dem Gehäuse des ersten Getriebes verbunden, insbesondere schraubverbunden,
wobei das Gehäuse des zweiten Winkelgetriebes mit dem Gehäuse des zweiten Getriebes verbunden ist, insbesondere schraubverbunden. Von Vorteil ist dabei, dass ein einfacher stabiler Aufbau ermöglicht ist und das Reaktionsmoment direkt zwischen den Gehäusen durchleitbar ist.

**Erfindungsgemäß** sind die erste und zweite Zwischenwelle miteinander einteilig, also einstückig, ausgeführt,
und/oder die erste und zweite Zwischenwelle sind über ein Gelenk gekoppelt. Von Vorteil ist dabei, dass eine besonders einfache und kompakte Kopplung ausführbar ist.

Bei einer vorteilhaften Ausgestaltung ist das erste Getriebe von einem ersten Synchronmotor antreibbar,
wobei das zweite Getriebe von einem zweiten Synchronmotor antreibbar ist,
wobei der erste Synchronmotor von einem ersten Wechselrichter gespeist wird,
wobei der zweite Synchronmotor von einem zweiten Wechselrichter gespeist wird,
wobei der erste Wechselrichter als Master einer Master-Slave-Regelung fungiert,
wobei der zweite Wechselrichter als Slave der Master-Slave-Regelung fungiert. Von Vorteil ist dabei, dass ein Ausgleichen der Leistungen und/oder Drehmomente der beiden Motoren ermöglicht ist. Dabei ist die Kopplung nicht direkt ausgeführt, sondern über die Zwischenwellen. Somit müssen die Motoren weniger leistungsstark ausgelegt werden, da nur die maximale Abweichung vom Durchschnittswert der Belastung übertragbar sein muss.

Bei einer vorteilhaften Ausgestaltung wird der erste Synchronmotor in Drehzahlregelung betrieben, insbesondere wobei ein Sensor zur Erfassung der Drehzahl des Synchronmotors am ersten Synchronmotor angeordnet ist und der mittels des Sensors erfasste Istwert der Drehzahl auf einen Sollwert hin geregelt wird,
wobei das vom ersten Synchronmotor erzeugte Drehmoment bestimmt wird und daraus ein Drehmomentsollwert auf den das vom zweiten Synchronmotor erzeugte Drehmoment hin geregelt wird, insbesondere indem dessen Solldrehzahl als Stellwert verwendet wird und die erfasste Istdrehzahl des zweiten Synchronmotors auf diesen Stellwert hin geregelt wird. Von Vorteil ist dabei, dass der Master die gewünschte Drehzahl aufweist und der Slave das vom Master erzeugte Drehmoment auf das gewünschte Drehmoment hin ergänzt. Somit wird ein gegebenenfalls abweichendes Drehmoment ausgeglichen.

Bei einer vorteilhaften Ausgestaltung wird das zwischen erstem und zweitem Winkelgetriebe übertragene, insbesondere über die Gelenkwellen übertragene, Drehmoment erfasst und auf unzulässig große Abweichung von einem Schwellwert überwacht und/oder auf Überschreiten eines Schwellwertes. Von Vorteil ist dabei, dass eine Überwachung auf Ausfall der Mechanik ermöglicht ist.

Bei einer vorteilhaften Ausgestaltung wird der erfasste Wert des zwischen erstem und zweitem Winkelgetriebe übertragenen Drehmoments dem ersten oder zweiten Wechselrichter zugeführt und wird bei der Regelung verwendet, insbesondere also wird abhängig von diesem Wert eine Stellgröße erzeugt. Von Vorteil ist dabei, dass das Ausgleichsmoment nicht theoretisch bestimmt wird, sondern direkt erfasst wird und somit verwendbar für die Regelung ist.

Wichtige Merkmale bei der Extrudermaschine mit einem vorgenannten Getriebesystem sind, dass die abtreibende Welle des ersten Getriebes drehfest mit einer Extruderschnecke verbunden ist,
wobei die abtreibende Welle des zweiten Getriebes mit einer zweiten Extruderschnecke verbunden ist,
- wobei die Verzahnung der ersten Extruderschnecke in die Verzahnung der zweiten Extruderschnecke eingreift,
   wobei die Verzahnung der ersten Extruderschnecke beabstandet ist von der Verzahnung der zweiten Extruderschnecke, insbesondere also diese nicht berührt,
- und/oder wobei derjenige Raumbereich, welcher bei Drehbewegung der ersten Extruderschnecke von deren Verzahnung überdeckt wird, mit demjenigen Raumbereich überlappt, welcher bei Drehbewegung der zweiten Extruderschnecke von deren Verzahnung überdeckt wird.

Von Vorteil ist dabei, dass eine Berührung der Schnecken durch die mechanische starre Kopplung sicher vermieden ist. Außerdem sind die antreibenden Motoren entlastet, weil sie nicht direkt gekoppelt sind sondern über die Zwischenwelle, also über zwischengeschaltete Getriebestufen. Die Motoren werden in Master-Slave-Regelung betrieben, wobei ein Ausgleichsmoment über die Zwischenwellen fließen darf.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist **zur Erläuterung des technischen Hintergrundes ein** Getriebesystem schematisch skizziert, welches zwei Getriebe 1 aufweist, deren Zwischenwellen aneinandergekoppelt sind.
In der Figur 2 ist im Unterschied zur Figur 1 die Kopplung mittels Gelenkwellen 22 ausgeführt.
In der Figur 3 sind wiederum zwei solche Getriebe 1 über Gelenkwellen 22 gekoppelt ausgeführt und ein entsprechendes Getriebesystem gebildet.
In der Figur 4 sind die Gelenkwellen 22 nicht gezeigt, aber ein zur Figur 3 unterschiedlicher Blickwinkel vorhanden.

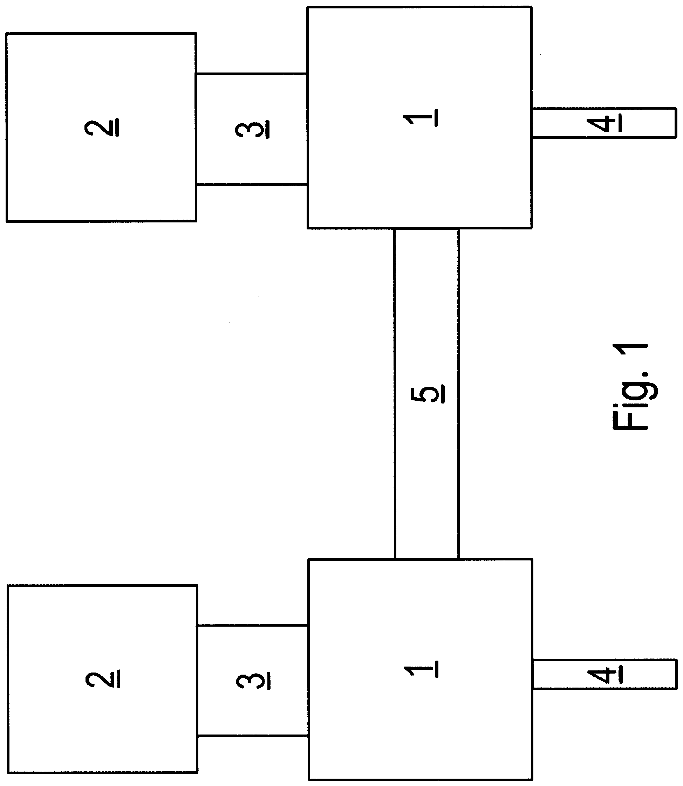

Wie in Figur 1 dargestellt, treibt ein erster Motor 2, insbesondere Elektromotor, insbesondere Synchronmotor, die Antriebswelle 3 eines ersten Getriebes 1 an, dessen Abtriebswelle 4 beispielsweise eine Extruderschnecke antreibt und dabei mit dieser drehfest verbunden ist.

Ebenso treibt ein zweiter Motor 2, insbesondere Elektromotor, insbesondere Synchronmotor, die Antriebswelle 3 eines zweiten Getriebes 1 an, dessen Abtriebswelle 4 beispielsweise eine zweite Extruderschnecke antreibt und dabei mit dieser drehfest verbunden ist.

Erste und zweite Extruderschnecke sind derart angeordnet, dass die Schneckenverzahnungen zwar ineinander eingreifen, aber nicht berühren.

Die Getriebe 1 weisen jeweils mindestens zwei Getriebestufen auf. Somit ist die jeweilige abtreibende Welle, also Zwischenwelle, der ersten Getriebestufe eintreibende Welle der nächsten Getriebestufe. Die beiden Zwischenwellen sind jeweils drehfest mit einer Verbindungswelle 5 verbunden. Vorzugsweise sind die beiden Zwischenwellen mit der Verbindungswelle 5 einstückig ausgeführt.

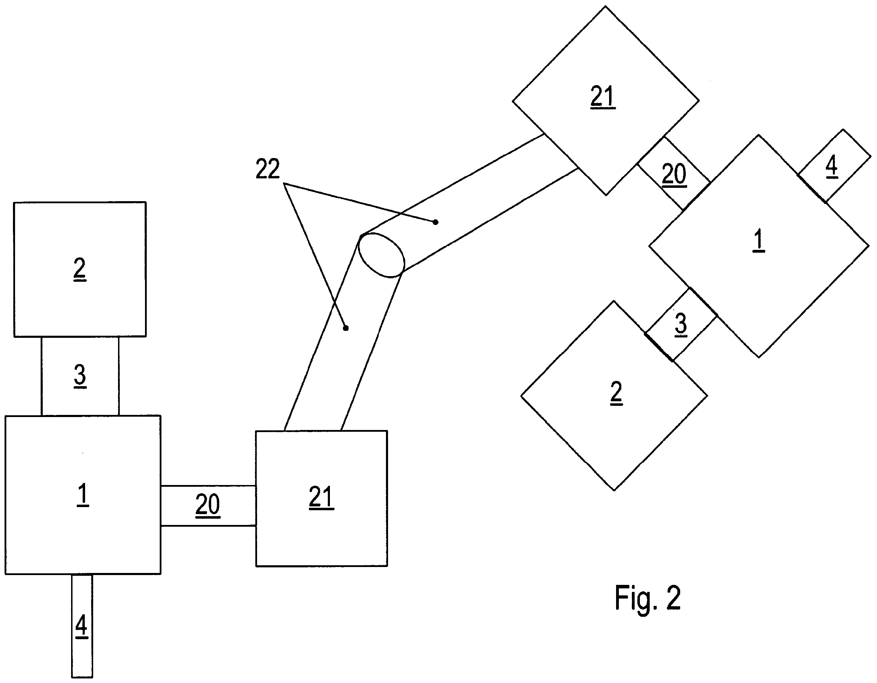

Wie in Figur 2 gezeigt, ist statt der starren Verbindung nach Figur 1 die Zwischenwelle des ersten Getriebes 1 über Winkelgetriebe 21 und Gelenkwellen 22 mit der Zwischenwelle des zweiten Getriebes 1 verbunden. Somit sind die Getriebe 1 auch nicht parallel, sondern mit einem Winkel zueinander anordenbar. Hierzu wird die Zwischenwelle 20 zusätzlich als eintreibende Welle eines Winkelgetriebes 21 verwendet, dessen abtreibende Welle über Gelenkwellen 22 mit der eintreibenden Welle des zweiten Winkelgetriebes 21 drehfest verbunden ist. Alternativ ist auch die abtreibende Welle des ersten Winkelgetriebes 21 über ein Gelenk mit der eintreibenden Welle des zweiten Winkelgetriebes 21 verbunden, dessen abtreibende Welle mit der Zwischenwelle des zweiten Getriebes 1 drehfest verbunden ist.

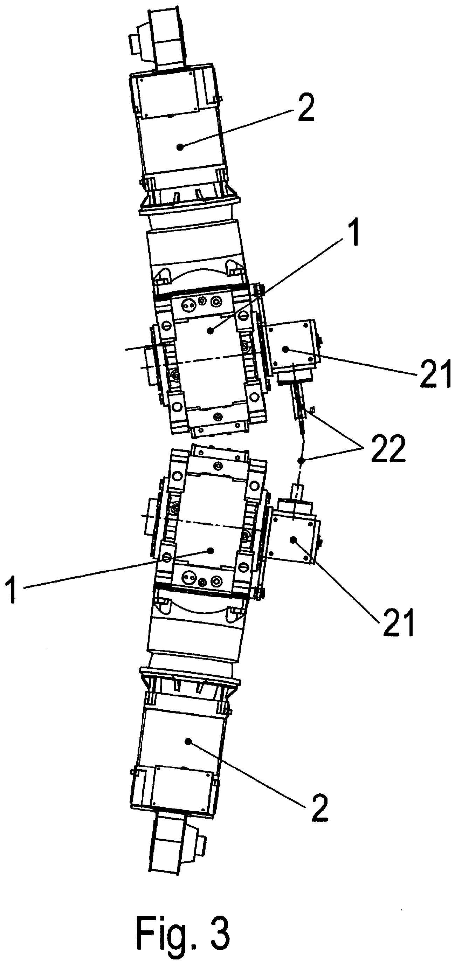

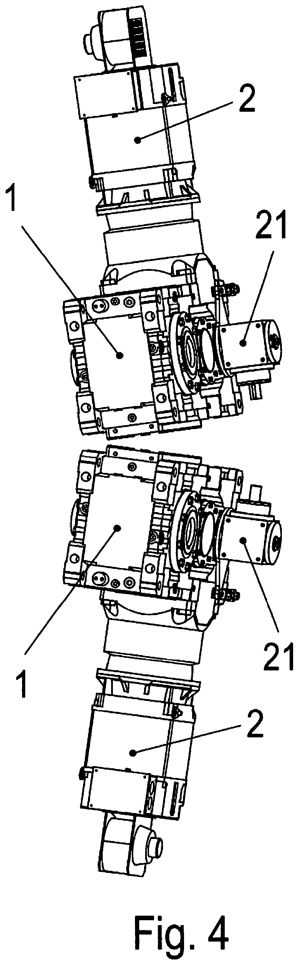

Wie in Figur 3 und 4 gezeigt, sind die Gehäuse des jeweiligen Winkelgetriebes 21 mit dem jeweiligen Gehäuse des Getriebes 1 verbunden.

Die Ausführung der Motoren 2 als Synchronmotoren ermöglicht eine hohe Regeldynamik.

Durch die gekoppelten Zwischenwellen ist eine Berührung der angetriebenen Schnecken verhindert, da eine mechanisch und somit sichere Kopplung der Abtriebswellen

Jeder Synchronmotor wird in Drehzahlregelung betrieben. Hierzu wird jeder der Synchronmotoren derart von einem jeweiligen Wechselrichter mit Drehspannung versorgt, dass seine Istdrehzahl auf eine Solldrehzahl hingeregelt wird. Am jeweiligen Synchronmotor ist hierzu jeweils ein Sensor zur Erfassung der Drehzahl der Antriebswelle 3 angeordnet.

Der erste Synchronmotor ist vorzugsweise als Master einer Master-Slave-Regelung vorgesehen. Der zweite Synchronmotor fungiert als Slave.

Vorzugsweise wird zusätzlich eine Drehmomentregelung überlagert, so dass das Drehmoment des ersten Synchronmotors auf einen Anteil, beispielsweise die Hälfte eines Drehmoments vorgegebenen Sollwert hingeregelt wird. Das vom ersten Synchronmotor erzeugte Ist-Drehmoment wird bestimmt und daraus der noch zum vorgegebenen Sollwert hin fehlende Anteil, insbesondere also ungefähr die Hälfte, dem zweiten Synchronmotor als Sollwert für seine Drehmomentenregelung vorgegebene, welche als Stellwert den für den zweiten Synchronmotor vorgegebenen Sollwert

### Bezugszeichenliste

1 Getriebe
2 Motor, insbesondere Elektromotor, insbesondere Synchronmotor
3 Antriebswelle
4 Abtriebswelle
5 Verbindungswelle
20 Zwischenwelle
21 Winkelgetriebe
22 Gelenkwelle

## Patentansprüche

1. Extrudermaschine **mit einem Getriebesystem, das ein erstes und ein zweites Getriebe aufweist,**
**wobei das erste Getriebe (1) zumindest eine Getriebestufe aufweist, deren abtreibende Welle als eintreibende Welle einer zweiten Getriebestufe des ersten Getriebes fungiert und somit eine erste Zwischenwelle (20) ist,**
**wobei das zweite Getriebe (1) zumindest eine Getriebestufe aufweist, deren abtreibende Welle als eintreibende Welle einer zweiten Getriebestufe des zweiten Getriebes fungiert und somit eine zweite Zwischenwelle (20) ist,**
**wobei die erste Zwischenwelle (20) aus einem Gehäuse des ersten Getriebes herausgeführt ist,**
**wobei die zweite Zwischenwelle (20) aus einem Gehäuse des zweiten Getriebes herausgeführt ist,**
**wobei die erste und zweite Zwischenwelle (20) miteinander drehfest gekoppelt sind,** wobei die Extrudermaschine eine erste Extruderschnecke und eine zweite Extruderschnecke aufweist,
wobei die abtreibende Welle des ersten Getriebes drehfest mit der ersten Extruderschnecke verbunden ist,
wobei die abtreibende Welle des zweiten Getriebes drehfest mit der zweiten Extruderschnecke verbunden ist,
wobei die Schneckenverzahnungen der ersten und zweiten Extruderschnecke ineinandergreifen, wobei die die Schneckenverzahnungen der ersten und zweiten Extruderschnecke sich nicht berühren,
**dadurch gekennzeichnet, dass**
**die erste und zweite Zwischenwelle (20) miteinander einteilig, also einstückig,** ausgeführt sind
**oder dass die erste und zweite Zwischenwelle (20) über ein Gelenk gekoppelt sind.**

2. **Extrudermaschine** nach Anspruch 1,
**dadurch gekennzeichnet, dass**
die erste Getriebestufe des ersten Getriebes eine Stirnradgetriebestufe ist,
und/oder dass
die zweite Getriebestufe des ersten Getriebes eine Stirnradgetriebestufe ist,
und/oder dass
die erste Getriebestufe des zweiten Getriebes eine Stirnradgetriebestufe ist, und/oder dass
die zweite Getriebestufe des zweiten Getriebes eine Stirnradgetriebestufe ist.

3. **Extrudermaschine** nach mindestens einem der vorangegangenen Ansprüche,
**dadurch gekennzeichnet, dass**
die erste Zwischenwelle (20) über ein erstes und ein zweites Winkelgetriebe (21) mit der zweiten Zwischenwelle (20) drehfest verbunden ist,
insbesondere wobei eine insbesondere abtreibende Welle des ersten Winkelgetriebes mittels Gelenk und/oder Gelenkwellen (22) mit einer insbesondere abtreibenden Welle des zweiten Winkelgetriebes verbunden sind.

4. **Extrudermaschine** nach Anspruch 3,
**dadurch gekennzeichnet, dass**
**ein** Gehäuse des ersten Winkelgetriebes mit dem Gehäuse des ersten Getriebes verbunden ist, insbesondere schraubverbunden,
und/oder dass
**ein** Gehäuse des zweiten Winkelgetriebes mit dem Gehäuse des zweiten Getriebes verbunden ist, insbesondere schraubverbunden.

5. **Extrudermaschine** nach mindestens einem der vorangegangenen Ansprüche,
**dadurch gekennzeichnet, dass**
das erste Getriebe (1) von einem ersten Synchronmotor **antreibbar** ist,
wobei das zweite Getriebe (1) von einem zweiten Synchronmotor **antreibbar** ist,
wobei der erste Synchronmotor von einem ersten Wechselrichter **speisbar**,
wobei der zweite Synchronmotor von einem zweiten Wechselrichter **speisbar**,
wobei der erste Wechselrichter als Master einer Master-Slave-Regelung fungiert,
wobei der zweite Wechselrichter als Slave der Master-Slave-Regelung fungiert.

6. **Verfahren zum Betreiben einer Extrudermaschine** nach mindestens einem der vorangegangenen Ansprüche,
**dadurch gekennzeichnet, dass**
der erste Synchronmotor in Drehzahlregelung betrieben wird, insbesondere wobei ein Sensor zur Erfassung der Drehzahl des Synchronmotors am ersten Synchronmotor angeordnet ist und der mittels des Sensors erfasste Istwert der Drehzahl auf einen Sollwert hin geregelt wird,
wobei das vom ersten Synchronmotor erzeugte Drehmoment bestimmt wird und daraus ein Drehmomentsollwert auf den das vom zweiten Synchronmotor erzeugte Drehmoment hin geregelt wird, insbesondere indem dessen Solldrehzahl als Stellwert verwendet wird und die erfasste Istdrehzahl des zweiten Synchronmotors auf diesen Stellwert hin geregelt wird.

7. **Verfahren nach Anspruch 6, wenn die Extrudermaschine nach einem der Ansprüche 3 oder 4 ausgeführt ist,**
**dadurch gekennzeichnet, dass**
zwischen erstem und zweiten Winkelgetriebe (21) übertragene, insbesondere über die Gelenkwellen (22) übertragene, Drehmoment erfasst wird und auf unzulässig große Abweichung von einem Schwellwert überwacht wird und/oder auf Überschreiten eines Schwellwertes.

8. **Verfahren nach Anspruch 7,**
**dadurch gekennzeichnet, dass**
der erfasste Wert des zwischen erstem und zweitem Winkelgetriebe (21) übertragenen Drehmoments dem ersten oder zweiten Wechselrichter zugeführt wird und bei der Regelung verwendet wird, insbesondere also abhängig von diesem Wert eine Stellgröße erzeugt wird.

## Claims

1. An extruder machine having a gear system which has a first and a second gear, wherein the first gear (1) has at least one gear stage, the output shaft of which acts as the input shaft of a second gear stage of the first gear and thus is a first intermediate shaft (20),
wherein the second gear (1) has at least one gear stage, the output shaft of which acts as the input shaft of a second gear stage of the second gear and thus is a second intermediate shaft (20),
wherein the first intermediate shaft (20) is guided out of a housing of the first gear,
wherein the second intermediate shaft (20) is guided out of a housing of the second gear,
wherein the first and second intermediate shafts (20) are coupled non-rotatably together,
wherein the extruder machine has a first extruder screw and a second extruder screw,
wherein the output shaft of the first gear is connected non-rotatably to the first extruder screw,
wherein the output shaft of the second gear is connected non-rotatably to the second extruder screw,
wherein the screw teeth of the first and second extruder screws interlock, wherein the screw teeth of the first and second extruder screws do not touch,
**characterised in that**
the first and second intermediate shafts (20) are embodied in one part, i.e. in one piece, with each other
or **in that** the first and second intermediate shafts (20) are coupled via an articulation.

2. An extruder machine according to claim 1,
**characterised in that**
the first gear stage of the first gear is a spur gear stage,
and/or **in that**
the second gear stage of the first gear is a spur gear stage,
and/or **in that**
the first gear stage of the second gear is a spur gear stage,
and/or **in that**
the second gear stage of the second gear is a spur gear stage.

3. An extruder machine according to at least one of the preceding claims,
**characterised in that**
the first intermediate shaft (20) is connected non-rotatably to the second intermediate shaft (20) via a first and a second right-angle gear (21),
in particular wherein an in particular output shaft of the first right-angle gear is connected by means of an articulation and/or articulated shafts (22) to an in particular output shaft of the second right-angle gear.

4. An extruder machine according to claim 3,
**characterised in that**
a housing of the first right-angle gear is connected, in particular screw-connected, to the housing of the first gear,
and/or **in that**
a housing of the second right-angle gear is connected, in particular screw-connected, to the housing of the second gear.

5. An extruder machine according to at least one of the preceding claims, **characterised in that**
the first gear (1) can be driven by a first synchronous motor,
the second gear (1) being able to be driven by a second synchronous motor,
the first synchronous motor being able to be fed by a first inverter,
the second synchronous motor being able to be fed by a second inverter,
the first inverter acting as the master of a masterlslave control,
the second inverter acting as the slave of the master/slave control.

6. A method for operating an extruder machine according to at least one of the preceding claims,
**characterised in that**
the first synchronous motor is operated in speed control, in particular with a sensor for detecting the speed of the synchronous motor being arranged on the first synchronous motor, and the actual value of the speed detected by means of the sensor being controlled to a setpoint value,
the torque generated by the first synchronous motor being determined, and therefrom a torque setpoint to which the torque generated by the second synchronous motor is controlled, in particular by using its setpoint speed as a manipulated value, and the detected actual speed of the second synchronous motor being controlled to this manipulated value.

7. A method according to claim 6, if the extruder machine is embodied according to one of claims 3 or 4,
**characterised in that**
torque transferred between the first and second right-angle gears (21), in particular transferred via the articulated shafts (22), is detected and monitored for impermissibly large deviation from a threshold value and/or for exceeding a threshold value.

8. A method according to claim 7,
**characterised in that**
the detected value of the torque transferred between the first and second right-angle gears (21) is supplied to the first or second inverter and is used in the control, in particular therefore a controlled variable is generated dependent on this value.

## Revendications

1. Extrudeuse équipée d'un système de transmission comprenant des premier et second engrenages,
sachant que le premier engrenage (1) comporte au moins un étage de transmission dont l'arbre de sortie remplit la fonction d'un arbre d'entrée d'un second étage de transmission dudit premier engrenage, et se présente ainsi comme un premier arbre intermédiaire (20), le second engrenage (1) comportant au moins un étage de transmission dont l'arbre de sortie remplit la fonction d'un arbre d'entrée d'un second étage de transmission dudit second engrenage, et se présente ainsi comme un second arbre intermédiaire (20),
le premier arbre intermédiaire (20) étant prolongé au-delà d'un carter du premier engrenage,
le second arbre intermédiaire (20) étant prolongé au-delà d'un carter du second engrenage, lesdits premier et second arbres intermédiaires (20) étant couplés l'un à l'autre avec verrouillage rotatif,
l'extrudeuse étant dotée d'une première vis sans fin d'extrusion et d'une seconde vis sans fin d'extrusion,
l'arbre de sortie du premier engrenage étant relié, avec verrouillage rotatif, à la première vis sans fin d'extrusion,
l'arbre de sortie du second engrenage étant relié, avec verrouillage rotatif, à la seconde vis sans fin d'extrusion,
les dentures desdites première et seconde vis sans fin d'extrusion étant mutuellement en prise, sachant que lesdites dentures des première et seconde vis sans fin d'extrusion ne sont pas en contact,
**caractérisée par le fait que**
les premier et second arbres intermédiaires (20) sont réalisés d'un seul tenant, c'est-à-dire d'une seule pièce ;
ou **par le fait que** lesdits premier et second arbres intermédiaires (20) sont couplés au moyen d'une articulation.

2. Extrudeuse selon la revendication 1,
**caractérisée par le fait que**
le premier étage de transmission du premier engrenage est un étage de transmission à pignons droits ;
et/ou **par le fait que**
le second étage de transmission dudit premier engrenage est un étage de transmission à pignons droits ;
et/ou **par le fait que**
le premier étage de transmission du second engrenage est un étage de transmission à pignons droits ;
et/ou **par le fait que**
le second étage de transmission dudit second engrenage est un étage de transmission à pignons droits.

3. Extrudeuse selon au moins l'une des revendications précédentes, **caractérisée par le fait que**
le premier arbre intermédiaire (20) est relié au second arbre intermédiaire (20) avec verrouillage rotatif, au moyen de premier et second engrenages coniques (21),
sachant notamment qu'un arbre, en particulier un arbre de sortie du premier engrenage conique est relié à un arbre, en particulier à un arbre de sortie du second engrenage conique au moyen d'une articulation et/ou d'arbres articulés (22).

4. Extrudeuse selon la revendication 3,
**caractérisée par le fait**
**qu'**un carter du premier engrenage conique est relié, notamment relié par vissage, au carter du premier engrenage ;
et/ou par le fait
**qu'**un carter du second engrenage conique est relié, notamment relié par vissage, au carter du second engrenage.

5. Extrudeuse selon au moins l'une des revendications précédentes, **caractérisée par le fait que**
le premier engrenage (1) peut être entraîné par un premier moteur synchrone,
le second engrenage (1) pouvant être entraîné par un second moteur synchrone,
ledit premier moteur synchrone pouvant être alimenté par un premier onduleur,
ledit second moteur synchrone pouvant être alimenté par un second onduleur,
ledit premier onduleur remplissant une fonction d'élément dominant d'une régulation du type dominant-asservi,
ledit second onduleur remplissant la fonction de l'élément asservi de ladite régulation du type dominant-asservi.

6. Procédé d'exploitation d'une extrudeuse conforme à au moins l'une des revendications précédentes,
**caractérisé par le fait que**
le premier moteur synchrone est actionné en mode régulation de vitesse angulaire, sachant notamment qu'un capteur est implanté sur ledit premier moteur synchrone en vue de détecter la vitesse angulaire dudit moteur synchrone et que la valeur réelle de la vitesse angulaire, détectée au moyen dudit capteur, est régulée vers une valeur de consigne, sachant que le couple de rotation engendré par ledit premier moteur synchrone est déterminé et que, sur cette base, une valeur de consigne de couple de rotation est régulée vers le couple de rotation engendré par le second moteur synchrone, en particulier du fait que la vitesse angulaire de consigne de ce dernier est utilisée en tant que valeur de réglage, et que la vitesse angulaire réelle détectée dudit second moteur synchrone est régulée vers cette valeur de réglage.

7. Procédé selon la revendication 6, lorsque l'extrudeuse est réalisée en conformité avec l'une des revendications 3 ou 4,
**caractérisé par le fait que**
le couple de rotation transmis entre les premier et second engrenages coniques (21), notamment transmis par l'intermédiaire des arbres articulés (22), est détecté et surveillé quant à un écart intolérablement grand par rapport à une valeur de seuil, et/ou quant au dépassement d'une valeur de seuil.

8. Procédé selon la revendication 7,
**caractérisé par le fait que**
la valeur détectée du couple de rotation, transmis entre les premier et second engrenages coniques (21), est délivrée au premier ou second onduleur et est utilisée lors de la régulation, c'est-à-dire qu'une grandeur de réglage est notamment engendrée en fonction de cette valeur.
